(19) Europäisches Patentamt
European Patent Office
Office européen des brevets

(11) Publication number: **0 159 794**
**A2**

(12) **EUROPEAN PATENT APPLICATION**

(21) Application number: 85301768.9

(22) Date of filing: 14.03.85

(51) Int. Cl.⁴: B 01 F 17/52

(30) Priority: 19.03.84 GB 8407096

(43) Date of publication of application: 30.10.85
Bulletin 85/44

(84) Designated Contracting States: AT BE CH DE FR GB IT LI LU NL SE

(71) Applicant: **Albright & Wilson Limited, Albright & Wilson House Hagley Road West, Oldbury Warley West Midlands, B68 ONN (GB)**

(72) Inventor: **Jones, Mervyn Francis, 38 Kewstoke Road, Stoke Bishop Bristol, 9 (GB)**

(74) Representative: **Savidge, Roger Gordon Madgwick et al, c/o Albright & Wilson Limited 1 Knightsbridge Green, London SW1X 7QD (GB)**

(54) **Novel surfactants.**

(57) A novel surfactant comprising an alkali metal, ammonium or alkaline earth metal, sulphosuccinate half ester, of an alkoxylated, fortified rosin acid, having an average of at least 1.5 polyalkyleneoxy groups per molecule of said surfactant, is valuable as a dispersant for rosin in size.

EP 0 159 794 A2

## INTRODUCTION

The present invention relates to novel surfactants derived from fortified rosins, which surfactants are of particular use in the preparation of rosin emulsions, suitable for sizing paper.

Rosin contains a mixture of aromatic carboxylic acids whose major constituent is the tricyclic, doubly unsaturated, monocarboxylic acid, abietic acid. The levopimaric acid isomer of abietic acid undergoes Diels Alder reactions with dienophiles. In particular rosin may be reacted with dienophilic carboxylic acids such as maleic anhydride or fumaric acid to form a tetracyclic poly carboxylic acid. This process is called "fortification". Fortified rosins are widely used in size for the paper industry.

Conventionally, fortified rosin is saponified with alkali and emulsified in water. Casein is added to stabilise the emulsion. Casein stabilised emulsions, however, are susceptible to microbiolical spoilage. To avoid this problem a number of attempts have been made to develop alternative stabilisers. For example various surfactants, including alkyl phenyl ether sulphates and sulphosuccinate half esters have been proposed as stabilisers. The casein free rosin emulsions proposed hitherto have all exhibited various disadvantages which have rendered them generally uncompetitive with conventional casein stabilised emulsions. These disadvantages include poor stability, particularly on shearing, and a tendency to foam. Because of these disadvantages, there has been a trend away from the casein-free emulsion and back to casein stabilised size.

We have now discovered that a substantially improved anionic stabiliser for rosin emulsions may be obtained by reacting a derivative of fortified rosin acid having a plurality of polyalkyleneoxy chains per molecule, so as to provide a sulphosuccinate half ester.

## THE PRIOR ART

U.S.P. 4,203,776 describes the use of alkyl phenyl ether sulphosuccinates as stabilisers for fortified rosin emulsions.

U.S.P. 4,267,099 describes the use of alkyl phenyl ether sulphates as rosin emulsion stabilisers.

U.S.P 4,260,550 describes non-ionic surfactants prepared by reacting maleinated abietic acid with a non-ionic polyoxyalkylene surfactant.

U.S.P. 4,238,380 describes the use of sulphosuccinate half esters of ethoxylated rosin acids having 1 to 5 alkyleneoxy groups as foam stabilisers for latex emulsions. This disclosure counterindicates the use of such products as size stabilisers, where foam stabilisation is a serious disadvantage.

Japanese Patent No. 8270158 describes the use of the sulphosuccinate half esters of ethoxylated rosin acid to emulsify rosin in water. The composition described in the aforesaid Japanese patent is based on the monocarboxylic rosin acid. It thus differs fundamentally from our novel surfactants in posessing only one hydrophilic group. Such products are insufficiently soluble in water to provide commercially acceptable rosin emulsions.

## THE INVENTION

The present invention provides a novel surfactant comprising the alkali metal, ammonium or alkaline earth metal sulphosuccinate half ester, of an alkoxylated, fortified rosin acid, having an average of at least 1.5 polyalkyleneoxy groups per molecule of said surfactant.

According to a more specific embodiment our invention provides a maleinated and/or fumarated rosin, ethoxylated to provide an average of from 0.5 to 1 equivalents of polyethyleneoxy chains per esterifiable carboxy group, said polyethyleneoxy chains having an average of from 4.5 to 30 ethyleneoxy units each, and being esterified with disodium sulphosuccinyl groups.

In particular our invention provides a compound or mixture of compounds of the formula

$$H_{(3-m)}.\ R.\ [(CH_2CH_2O)_n\ -OC.C_2H_3SO_3Na.\ COONa]_m;$$

wherein R is a fortified rosin acid tricarboxylate group, m has an average value of from 1.5 to 3, and n has an average value from 4.5 to 25; and mixtures of rosin acids and/or fortified rosin acids and/or water, containing such a compound or mixture of compounds.

Typically, products according to our invention comprise a mixture of salts of unesterified and partially esterified mono and polycarboxylic rosin acids.

According to a further embodiment our invention provides a method for the preparation of a surfactant, which method comprises (i) reacting fortified levopimaric acid or a fortified rosin at elevated temperature with from 1.5 to 3 moles of polyethylene glycol per mole of polycarboxylic acid, said polyethylene glycol having an average of from 4.5 to 50 ethyleneoxy groups per molecule thereof, (ii) reacting the ethoxylated acid with maleic anhydride and (iii) reacting the product of (ii) with alkali metal sulphite.

According to a further embodiment our invention provides an oil in water emulsion of rosin, preferably fortified rosin, optionally at least partially saponified, together with a stabilising proportion of a surfactant of the invention.

## THE ROSIN ACID

The rosin acid feedstock for use in our invention is a fortified rosin acid. Typically, a gum rosin or, preferably, on economic grounds, a tall oil rosin, is fortified by reaction with an $\alpha - \beta$ dicarboxylic acid or anhydride such as maleic anhydride or fumaric acid or with any esterifiable or transesterifiable derivative of maleic or fumaric acid, such as an acid chloride or methyl ester, or less preferably with any other dienophilic di- or poly-carboxylic acid. Alternatively a fortified abietic acid fraction of rosin may be used as the acid feedstock.

The degree of fortification is typically from 40 to 100% molar based on the total fortifiable acid content of the rosin. This usually represents from 20% to 60% molar of the total rosin e.g. at least 30%. This may be achieved by reacting the rosin with from 5 to 18%, based on the weight of rosin, of maleic anhydride and/or fumaric acid, preferably 6 to 18%, e.g. 10 to 16% by weight.

Typically the reaction is carried out at temperatures substantially greater than the melting point (e.g. typically above 110°C) but insufficient to decompose the rosin e.g. temperatures of 150°C to 200°C are preferred. The reaction is optionally but preferably performed in the presence of a crystallisation inhibitor, e.g. para formaldehyde or formalin. Lower aryl sulphonic acids such as para toluene sulphonic acid in catalytic quantities, may also be present.

Usually the reaction takes 4 to 5 hours to complete in the presence of a catalyst and 5.5 to 8 hours in the absence of catalyst.

## THE ALKOXYLATION

The fortified rosin is preferably alkoxylated by esterifying the acid with a polyalkylene glycol. Polyethylene glycol is strongly preferred. Polyisopropoxy groups or mixed propoxy/ethoxy groups are within the broad scope of the invention but are substantially less satisfactory than polyethyleneoxy groups.

Esterification may be carried out in any conventional way for esterifying involatile carboxylic acids and alcohols. Typically the fortified rosin is melted and the polyalkylene glycol is added, optionally in the presence of an esterification catalyst such as zinc oxide. Preferably the mixture is heated to a temperature of 250-300°C under an inert atmosphere, e.g. nitrogen, for from 3 to 5 hours.

Typically the polyalkylene glycol is added in a proportion sufficient to provide an average of from 1.5 to 3 polyalkyleneoxy groups per molecule of alkoxylated fortified acid in the product, preferably 2 to 3 groups per molecule.

We believe that the polyalkylene glycol reacts preferentially with the two carboxy groups of the fortified acid, which derive from the maleic or fumaric acid.

The polyalkylene glycol preferably has an average of more than 4.5 but less than 50 alkyleneoxy units per molecule, e.g. 13.6 to 46 units per molecule, especially 10 to 15.

Generally speaking, rosin esters with an average of less than 13 ethyleneoxy groups, total, per molecule of fortified rosin ester, form anionic surfactant products which are insufficiently soluble in water to be useful as emulsion stabilisers, while products with more than 70 total ethylene oxy units per ester molecule tend to be of too high a molecular weight for effective stabilisation of rosin emulsions. Preferably surfactants according to our invention have from 13 to 60 ethylene oxide units per ester molecule.

We do not exclude the possibility of some polyethylene-glycol di-levopimarate or higher copolymer forming, but analysis has failed to provide evidence of such products, and suggests that the porportion, if any, is small.

Alkoxylation of the fortified rosin feedstock may alternatively be effected by reacting the rosin acids with alkylene oxide at elevated temperature under pressure or in the presence of an alkali catalyst.

## PREPARATION OF THE ANIONIC SURFACTANT

The nonionic intermediate formed by alkoxylation of the rosin acid feedstock may be converted into an anionic surfactant of the invention by any of the means conventional in the surfactant art for preparing anionic surfactants from nonionic surfactant alcohol precursor. For example the intermediate may react with maleic anhdride to form a maleate half ester, which may be sulphonated by reaction with sodium sulphite. Preferably the reaction mixture is maintained at a temperature of between 70°C and 100°C for from 40 to 100 minutes prior to addition of the sulphite. The latter may then be mixed with maleate half ester and sufficient hot water (e.g. 70°C to 100°C) added to form a clear solution. Typically such a solution may contain up to 50% by weight of solids.

In preparing the anionic surfactant from the non-ionic precursor a stoichiometric excess of either reagent of up to, for example 10% by weight may be employed. Preferably however the portions are substantially stoichiometric.

The anionic surfactant of our invention is preferably the sodium salt. Other water soluble salts such as potassium, lithium, ammonium or calcium may be used, but are substantially inferior to sodium salts in their emulsion stabilising action. Mixed salts may be used.

It is possible, in theory, to prepare surfactants of our invention by a process which comprises the steps of reacting fortified rosin with a polyethylene glycol mono (maleate half ester) or mono (sulphosuccinate half ester). In practice, however, this approach tends to provide unsatisfactory products, probably due to formation of copolymers, and is therefore not preferred.

## PREPARATION OF ROSIN EMULSIONS

Rosin emulsions may be prepared using our novel surfactant by the inversion process.

The rosin, preferably a fortified rosin optionally treated with para formaldehyde in the presence of para toluene sulphonic acid to inhibit crystallisation, and optionally one which has been at least partially saponified with concentrated sodium or potassium hydroxide or with a volatile base such as ammonia or a lower amine such as methylamine or triethanolamine, may be melted and a stabilising proportion of the surfactant (e.g. from 5 to 15% based on the total weight of rosin and surfactant) may then be added as a concentrated (e.g. 50% by weight solids) aqueous solution. Sufficient water is stirred in to form a creamy water in oil emulsion (e.g. 20 to 40% based on the weight of rosin).

On dilution with water the emulsion inverts to provide a stable oil-in-water emulsion, typically having a solids content of from 20% by weight up to the maximum achievable oil-in-water concentration, (often about 50% by weight solids) and preferably from 30% to 40% by weight solids. The rosin content of the emulsion or dispersion usually contains at least 90% of unsaponified rosin acids.

The emulsions may be used for sizing paper, including alumed paper. The emulsions may contain biocides, such as bactericides, slimicides and/or fungicides, or diluents such as wax.

## MISCELLANEOUS USES

Our novel surfactants are also useful generally as dispersants. For example they may be used to disperse pigments and fillers for use in paints. They may be used to form talc dispersions for paper coating. They may be used as dispersants in the preparation of coal dust slurries, aqueous tackifiers, disproportionated rosins, rosin diluents such as paraffin wax, metal finishing systems such as degreasing solutions, and in oil field secondary recovery and the dispersion of oil spills.

## EXAMPLES

Examples A to H describe the preparation of fortified rosin feedstock. Examples 1 to 15 describe the preparation of novel surfactants of our invention. Examples 16 to 36 describe the use of the novel surfactant of our invention to prepare rosin emulsions of our invention. The Ring and Ball Test was as described in I.P. 58 (1965). All percentages and parts are by weight unless stated to the contrary.

Examples B-H were carried out substantially as described for Example A, but with variations in those parameters identified by reference numerals (i)-(xi) as shown in Table I.

### Example A

(i) 4800 parts of (ii) tall oil rosin were heated with stirring to a first elevated temperature of (iii) 165°C. The tall oil rosin was maintained at that temperature while (iv) 4.8 parts para toluene sulphonic acid was added followed by (v) 120 parts of paraformaldehyde. The paraformaldehyde was added in small increments, allowing the froth to disperse from the surface before adding the next increment. When the addition was complete (vi) 264 parts of (vii) maleic anhydride was added and the mixture heated to a second elevated temperature of (viii) 185°C. The whole was then

maintained at that temperature for (ix) 4.5 hours with stirring. The batch was then allowed to cool to room temperature. The fortified rosin then had a water-soluble acid value equivalent to (x) 0.78 mg potassium hydroxide per gram of product and a softening point as determined by the "Ring and Ball" test of (xi) 77-78°C.

Table I

| | (i) Parts by weight rosin | (ii) Type of rosin | (iii) First elevated temp. | (iv) Parts of P tolene sulphonic acid | (v) Parts of paraform-aldehyde | (vi) Parts of di-enophile | (vii) Di-enophile | (viii) Second elevated temp. | (ix) Hours at second elevated temp. | (x) Acid value of product (mg. KOH per g.) | (xi) "Ring and Ball" softening temp. |
|---|---|---|---|---|---|---|---|---|---|---|---|
| A | 4800 | tall oil | 165°C | 4.8 | 120 | 264 | maleic anhydride | 185°C | 4.5 | 0.78 | 77-78°C |
| B | 1200 | tall oil | 165°C | 1.2 | 30 | 78 | maleic anhydride | 185°C | 4.5 | 0.89 | 80-81°C |
| C | 1500 | tall oil | 165°C | 1.5 | 37.5 | 75 | fumaric acid | 190-195°C | 4.5 | 3.2 | 77-78°C |
| D | 1500 | tall oil | 165°C | 1.5 | 37.5 | 120 | fumaric acid | 190-195°C | 4.5 | 3.0 | 90-92°C |
| E | 1500 | tall oil | 185°C | - | - | 165 | fumaric acid | 190-195°C | 4.5 | 0.37 | 96-97°C |
| F | 3000 | Chinese gum | 175°C | - | - | 480 | maleic anhydride | 175°C | 6 | 2.7 | 119-120°C |
| G | 3000 | Chinese gum | 180°C | - | - | 480 | fumaric acid | 180°C | 6 | 15.6 | 133°C |
| H | 3000 | Tall oil | 175°C | - | - | 480 | maleic anhydride | 175°C | 6 | 1.4 | 102-104°C |
| I | 1000 | Chinese gum | 175°C | - | - | 100 | maleic anhydride | 175°C | 5 | 1.6 | 103-105°C |
| J | 1000 | Tall oil | 175°C | - | - | 100 | maleic acid | 175°C | 5 | 2.3 | 88-90°C |
| K | 1000 | Chinese gum | 175°C | - | - | 60 | maleic anhydride | 175°C | 4 | 2.5 | 94-96°C |

Examples 2-15 were carried out substantially as hereinafter described for Example 1 but with the parameters (i) to (viii) varied as shown in Table II.

Example 1

100 parts of fortified rosin of (i) Example F was added to a reaction flask equipped with a thermometer, mechanical stirrer, glass tube to provide a bleed of nitrogen gas sub-surface, distillation head, condenser and receiver. (ii) 200 parts polyethyleneglycol of average molecular weight (iii) 600 was then added and heated. When the whole was melted at about 110°C-130°C the bleed of nitrogen gas was introduced, the stirrer was started and 0.1 parts zinc oxide was added. Heating was continued until a temperature of 260°C was reached. The mixture was held at 260°C to 270°C for (iv) 3.5 hours. The course of the reaction was monitored by Infra Red Spectroscopy and by total acidity as expressed in milligram KOH per 1 gram of sample. The product ester was allowed to cool with the nitrogen gas bleed to room temperature.

100 parts of the ester was warmed to 80°C with stirring. (v) 9.4 parts of maleic anhydride was added and stirred keeping the temperature between 80-90°C for 1 hour. (vi) 12.1 parts of sodium sulphite was added and stirred keeping the temperature between 80-95°C for 5 minutes. (vii) 122 parts of hot water was added slowly keeping the temperature at 85-95°C until the solution clarified. The solution which had a solids content of (viii) 50% wt./wt/ was then allowed to cool with stirring.

Table II

| Example | (i) Rosin Product of... | (ii) % P.E.G. on Rosin | (iii) Mole Wt of P.E.G. | (iv) Hours at 260-270° | (v) % Maleic anhydride on ester intermediate | (vi) % Sulphite on ester intermediate | (vii) % wt hot water on ester intermediate | (viii) % solids in Products |
|---|---|---|---|---|---|---|---|---|
| 2 | Example F | 171 | 600 | 5 | 10.4 | 13.4 | 124 | 50 |
| 3 | Example F | 256 | 600 | 3 | 7.9 | 10.1 | 118 | 50 |
| 4 | Example H | 171 | 600 | 5 | 7.9 | 10.1 | 118 | 50 |
| 5 | Example H | 200 | 600 | 3 | 9.4 | 12.1 | 122 | 50 |
| 6 | Example H | 256.5 | 600 | 4 | 7.9 | 10.1 | 118 | 50 |
| 7 | Example F | 114 | 400 | 4 | 13.2 | 17 | 130 | 50 |
| 8 | Example F | 285 | 1000 | 4 | 7.3 | 9.4 | 118 | 49.7 |
| 9 | Example G | 171 | 600 | 7 | 10.4 | 13.4 | 125 | 49.7 |
| 10 | Example G | 200 | 600 | 3 | 9.3 | 12.1 | 125 | 49.3 |
| 11 | Example G | 256 | 600 | 2.5 | 7.9 | 10.1 | 125 | 48.5 |
| 12 | Example F | 85.5 | 200 | 5 | 23 | 30 | 153 | 50 |
| 13 | Example I | 111 | 600 | 4 | 8.6 | 11.1 | 119 | 50 |
| 14 | Example J | 111 | 600 | 4 | 8.6 | 11.1 | 119 | 50 |
| 15 | Example K | 69 | 600 | 2 | 6.6 | 8.6 | 50 | 69.6 |

Examples 17 to 36 were carried out substantially as hereinafter described for Example 16 except that the parameters (i)-(viii) were varied as shown in Table III.

Example 16

300 parts of the fortified rosin of (i) Example A was heated to about 140°C to ensure complete melting and then cooled to about 100°C by adding small increments of a solution of 0.5gms. potassium hydroxide in cold water with stirring and allowing the water to flash off as steam. When the foaming stopped, a solution of 30 parts of dispersing agent of (ii) Example 1 in (iii) 30 parts of water, at a temperature of about (iv) 20°C, was added to the fused fortified rosin slowly with stirring. (v) 100 parts water at (vii) about 20°C was then added slowly to give a mixture with the typical smooth creamy-white appearance of a water-in-oil emulsion ready to be inverted. After the water addition was complete, stirring was continued for 2 minutes to ensure that the mixture was homogeneous. Then (vi) about 250 parts of water at (vii) 20°C was added slowly with vigorous stirring to invert the emulsion. The completed emulsion was cooled to room temperature, at the same time diluting with cold water to (viii) 40% solids content, filtered and bottled.

## Table III

| Example | (i) Rosin Product of... | (ii) Dispersant Product of... | (iii) Parts of water to dissolve 30 parts dispersants | (iv) Temperature of dispersant solution | (v) Parts by wt. of water per 300 parts rosin to form emulsion | (vi) Parts water per 300 parts rosin to invert emulsion | (vii) Temperature of water in (v) and (vi) | (viii) % solids content of Product |
|---|---|---|---|---|---|---|---|---|
| 16 | Example A | Example 1 | 30 | 20°C | 100 | 250 | 20°C | 40 |
| 17 | Example B | Example 1 | 30 | 20°C | 100 | 280 | 20°C | 40 |
| 18 | Example C | Example 1 | 30 | 20°C | 100 | 250 | 70°C | 40 |
| 19 | Example D | Example 1 | 30 | 85°C | 100 | 250 | 70°C | 40 |
| 20 | Example E | Example 1 | 30 | 90°C | 150 | 300 | 90°C | 30 |
| 21 | Example A | Example 2 | 30 | 20°C | 100 | 250 | 20°C | 40 |
| 22 | Example E | Example 3 | 30 | 90°C | 150 | 300 | 90°C | 30 |
| 23 | Example C | Example 4 | 30 | 20°C | 100 | 250 | 70°C | 40 |
| 24 | Example C | Example 5 | 30 | 20°C | 100 | 250 | 70°C | 40 |
| 25 | Example E | Example 6 | 30 | 90°C | 150 | 300 | 90°C | 30 |
| 26 | Example C | Example 7 | 30 | 20°C | 100 | 250 | 70°C | 40 |
| 27 | Example C | Example 8 | 30.4 | 20°C | 100 | 250 | 70°C | 40 |
| 28 | Example C | Example 3 | 30.7 | 20°C | 100 | 250 | 70°C | 40 |
| 29 | Example C | Example 10 | 30.4 | 20°C | 100 | 250 | 70°C | 40 |
| 30 | Example D | Example 11 | 30.8 | 85°C | 100 | 250 | 70°C | 40 |
| 31 | Example E | Example 12 | 31.7 | 90°C | 150 | 300 | 90°C | 30 |
| 32 | Example D | Example 13 | 30 | 20°C | 100 | 250 | 50°C | 40 |
| 33 | Example C | Example 2 | 30 | 20°C | 100 | 250 | 50°C | 40 |
| 34 | Example E | Example 13 | 30 | 90°C | 150 | 300 | 90°C | 30 |
| 35 | Example E | Example 14 | 30 | 90°C | 150 | 300 | 90°C | 30 |
| 36 | Example C | Example 15 | 13.1 | 40°C | 350 | - | 50°C | 37 |

CLAIMS

1. A surfactant comprising the alkali metal, ammonium or alkaline earth metal sulphosuccinate half ester, of an alkoxylated, fortified rosin having an average of at least 1.5 polyalkyleneoxy groups per molecule.

2. A maleinated and/or fumarated rosin, ethoxylated to provide an average of from 0.5 to to 1 equivalents of polyethyleneoxy chains per esterifiable carboxy group, said polyethyleneoxy chains having an average of from 4.5 to 30 ethyleneoxy units each, and being esterified with disodium sulphosuccinyl groups.

3. A composition comprising at least one compound of the formula:

$$H_{(3-m)}.R.[(CH_2CH_2O)_n.OC.C_2H_3.SO_3Na.CO_2Na]_m,$$

wherein each R is a fortified rosin acid tricarboxylate group, m has an average value of from 1.5 to 3, and n has an average value of from 4.5 to 25.

4. A composition according to claim 3, consisting essentially of a mixture of unesterified and partially esterified mono and polycarboxylic rosin acids and their salts, optionally with water.

5. A composition according to any foregoing claim wherein said rosin or rosin acid, as the case may be, is obtained by reacting a gum or tall rosin with from 5 to 18%, based on the weight thereof, of maleic anhydride and/or fumaric acid.

6. A composition according to any foregoing claim having an average total of from 13 to 60 ethyleneoxy units per molecule of ester.

7. An emulsion consisting essentially of rosin or fortified rosin, optionally at least partially saponified, and water and comprising a stabilising proportion of a composition according to any foregoing claim.

8. A method for the preparation of a surfactant which comprises:

(i) reacting a polycarboxylic acid containing composition consisting essentially of fortified levopimaric acid or a fortified rosin at elevated temperature with from 1.5 to 3 moles of polyethylene glycol per mole of polycarboxylic acid, said polyethylene glycol having an average of from 4.5 to 50 ethyleneoxy groups per molecule thereof;

(ii) reacting the ethoxylated acid with maleic anhydride and

(iii) reacting the product of (ii) with alkali metal sulphite.

9. A surfactant whenever prepared by the method of claim 8.

10. Compositions according to any of claims 1 to 7 and 9 substantially in accordance with any one of the Examples 1 to 36.